# EUROPEAN PATENT SPECIFICATION

(11) **EP 1 852 724 B1**
(45) Date of publication and mention of the grant of the patent: **01.04.2020**
(21) Application number: 07102131.5
(22) Date of filing: 12.02.2007
(51) Int. Cl.: G02B 21/00

(54) **Laser confocal scanning microscope and method of improving image quality in such microscope**
Konfokales Laser-Scanning-Mikroskop und Verfahren zur Verbesserung der Bildqualität bei einem solchen Mikroskop
Microscope confocal à balayage laser et procédé pour améliorer la qualité d'image d'un tel microscope

(30) Priority: 05.05.2006 GB 0608923
(43) Date of publication of application: 07.11.2007
(73) Proprietor: VisiTech International Ltd., Sunderland, SR5 2TQ (GB)
(72) Inventor: Sheblee, Jafer, c/o VisiTech International Ltd., Sunderland, SR5 2TQ (GB); Bell, Ken, c/o VisiTech International Ltd., Sunderland, SR5 2TQ (GB)
(74) Representative: Definition IP Limited

(56) References cited:
- EP-A1- 1 510 851
- JP-A- 11 095 109
- US-A- 6 028 306
- US-A1- 2006 072 191

## Description

The present invention relates to a laser confocal scanning microscope and to methods of improving image quality in such microscope.

### Description of the prior art

Multi-beam confocal scanning systems have some advantages over single point scanning confocal systems in that photo-bleaching and photo-toxic effects are reduced and the rate at which images are captured is increased due to the parallel scanning nature of the multi-beam technologies such as spinning discs (for example US patent 5,428,475) and 2-D array scanners (see for example PCT WO 03/075070).

The traditional spinning disc multi-beam confocal systems have evolved in different forms requiring either broad band illumination (filtered white light) or laser line illumination. These make use of the Nipkow disc principle in which a disc containing a dispersed set of apertures is rotated at speed in the illumination and emission light paths. Light passing through the apertures is focussed into the focus plane of the sample and reflected light, or fluorescent light, returned from the sample is focussed back at the apertures due to the reciprocal nature of the optical system. Light that originates above and below the focal plane of the sample is out of focus at the apertures and hence is rejected by them. The light that does pass through the apertures is used to form an image of the focal plane, hence a confocal image. The smaller the aperture the narrower the confocal plane that is imaged.

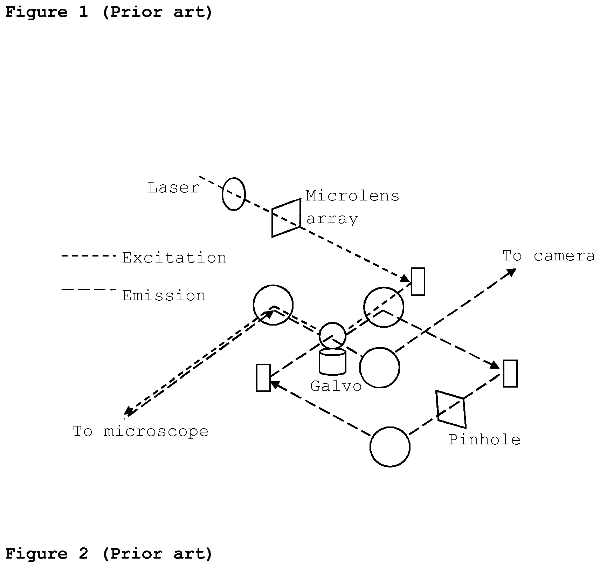

Spinning disc systems that use laser illumination (Figure. 1) usually include a complementary set of microlenses; each microlens collects the illumination over a larger area than its matching aperture and focuses the collected light into a point centred on its complementary aperture thus enhancing the illumination throughput. Without microlenses the transfer of light through the apertures may be of the order of 5% or less, but with the microlenses this increases significantly. Both white light and laser illumination versions have limitations which are inherent in the spinning disc technologies.

Each spinning disc usually contains several sectors and at the fastest image capture rates only one of these sectors will be used to form the image; the next image captured will use a different sector, and thus due to the small manufacturing tolerances between the sectors there is an inherent image to image variation in intensity and possibly also of quality.

The confocal apertures (generally but not exclusively circular pinholes) in these spinning discs are fixed and a change of aperture size (to maintain the same degree of confocality at various microscope magnifications) is either impossible or requires the exchange of the spinning disc.

At image exposure times that are not integer multiples of the period of the disc revolution, or integer multiples of the time for a single sector to scan the image, there are artefacts generated in the image (due to the partial sector scans) which become more pronounced as the exposure time for each image reduces (shorter exposure times are required to obtain faster image capture rates). As the exposure time reduces, the partial sector scans become an increasing proportion of the total exposure time, making the artefacts generated by the partial scans increasingly visible. These artefacts appear as variations in brightness between those regions of the image which are correctly scanned and those which are under-scanned or over-scanned by the partial sector scan. To reduce these artefacts, synchronisation is required between the image capture device and the rotation speed of the spinning disc. With motor speed control, controlled variations of the disc rotation speed do not occur instantly, which severely curtails the choice of exposure times for sequentially captured images (a sometimes necessary condition when subsequent images are illuminated or viewed at a different wavelength or band of wavelengths). The control mechanisms for these motors and the imperfections of the mechanical elements thereof can also introduce small random variations in speed, especially if the discs are not absolutely perfectly balanced or the bearings in which the motor and/or disc rotates do not offer a uniform resistance at all points in a revolution.

The introduction of the 2-D array laser confocal scanner (see for example PCT WO 03/075070) eliminates these limitations by using a stationary set of confocal apertures with a matching stationary set of microlenses (Figure 2). Scanning of the illumination, created by the microlenses, over the sample plane is performed by a galvanometer mirror, which de-scans the returning light from the sample, separates it from the excitation light by means of a dichroic (in the case of a fluorescent sample) or a beam splitter (in the case of a reflective sample), sends it through the set of confocal apertures and then rescans it onto the imaging detector using the rear face of the galvanometer mirror, which is also a mirror surface.

Thus the galvanometer, which is a precisely controllable scanning element with fast responses, together with the scanning of the image with the same microlens and confocal aperture arrays for each subsequent scan, ensures that image to image variations due to scan speed and sector variations are eliminated. A sync pulse is generated with each scan to trigger the exposure of the image detector, which is typically but not exclusively a 2D detector such as a CCD camera or one of its variants, and ensures perfect synchronisation of scanning and detection, irrespective of the image detector exposure time and the duration of the individual scan associated with it.

The stationary confocal aperture array may be modified to incorporate a sliding plate immediately adjacent to, and parallel to, the confocal aperture array, (see for example US patent application 2005007641). The sliding plate contains arrays (for example, seven arrays) of apertures smaller than the confocal aperture array, such that a collection of arrays of different aperture sizes is present on the sliding plate and displaced from each other by a known distance. A control system for sliding the plate enables any one of the collection of arrays to be positioned such that a selected array modifies and reduces the effective aperture size of the confocal aperture array. This provides the ability to change the aperture size to maintain confocality when a different microscope objective magnification is selected or to increase the light throughput for faster image acquisition speeds when confocality is less of an issue.

### Background of the invention

The 2-D array laser confocal scanner described in the prior art uses a single pattern of microlenses and confocal apertures that must scan from outside of one edge of the field of view, across the field of view, and end outside the opposite edge of the field of view. Thus the laser illumination is only present in the field of view for half of the total scan duration, reducing the overall efficiency of the system by half.

Each microlens and confocal aperture pair creates a single scanning line across the image and due to the single repeat pattern of both the microlens and confocal aperture arrays, defects in a single microlens or single confocal aperture become evident in the captured images as a darker or brighter scan line than the immediate neighbours, giving rise to random 'striping'.

There are also effects due to coherency between the microlens generated points of light, which through the scanning process are manifested as faintly visible repeating patterns of 'striping'.

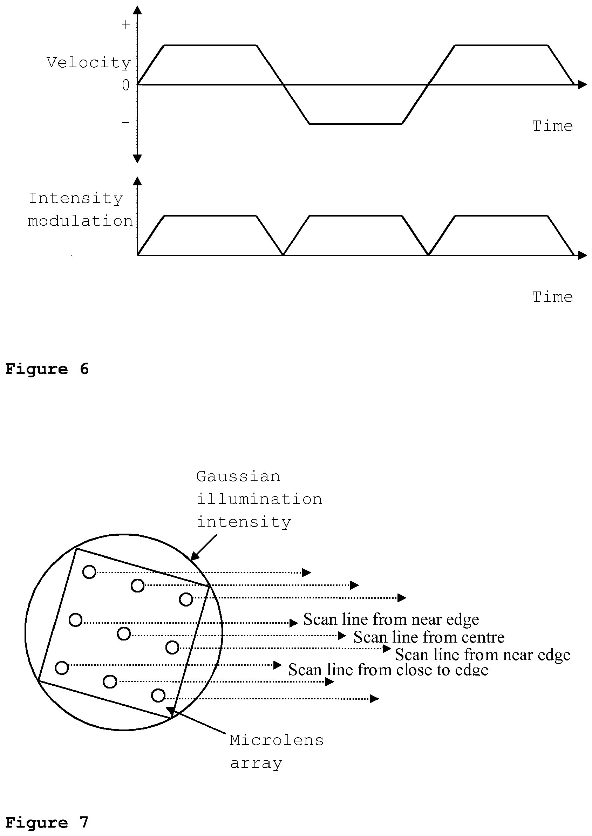

The Gaussian intensity distribution across the microlens array may also introduce a 'striping' effect into the images due to the variations in intensity between the microlenses that scan adjacent lines in the sample plane (Figure 7).

In the selectable pinhole assembly the oil (optical fluid) required to lubricate the sliding plates (to prevent scratching of their surfaces) should match the refractive indices between the sliding plates of the selectable confocal apertures and this complicates the production of such a configuration and it is also liable to failure of the sealing components. By designing the gap between the plates such that they are prevented from coming into contact with each other it is possible to dispense with the optical fluid and use an air gap, thus eliminating a potential failure mechanism.

There are confocal systems, such as those described in US6028306 which describes scanning along 2 axes at right angles to each other, in which the image is only available after reconstruction on a display screen.

### Summary of the Invention

The present invention provides a laser confocal scanning microscope with improved throughput and reduced striping due to imperfections in the microlens and/or confocal aperture arrays and of achieving selectable degrees of confocality
The present invention accordingly provides a laser confocal scanning microscope comprising a laser light source for emitting laser light at one or more different wavelengths; a laser beam expander for expanding the laser beam; a first galvanometer mirror for scanning and directing the laser light beam into a scanned sample plane via a microscope and for de-scanning a return light from the scanned sample plane; an array of microlenses positioned between said laser beam expander and said first galvanometer mirror, constructed and orientated such that a single scan of the first galvanometer mirror causes each microlens of the array to trace a separate scan line across the sample plane; an array of confocal apertures, which duplicates the pattern position of said array of microlenses pre-aligned such that each confocal aperture coincides with the matching microlens in said array of microlenses; a dichromatic mirror or a beam splitter, positioned between said first galvanometer mirror and said array of microlenses for separating the return light from the incident light path and directing the return light to said array of confocal apertures; an image detector, wherein the arrangement of said array of confocal apertures and of said first galvanometer mirror is such that light transmitted by said array of confocal apertures is directed to the rear face of said first galvanometer mirror, which is also a mirror, and as a result is scanned into said image detector; a means for driving said first galvanometer mirror to scan the laser light beam emerging from said array of microlenses over the sample plane, to descan the returned light from the sample plane, and to rescan the light passing through said confocal apertures into said image detector.

The present invention provides a method of increasing the intensity throughput of such a laser confocal scanning microscope and reducing the appearance of "stripes" due to imperfections in a microlens array and/or confocal aperture array thereof, comprising increasing the number of repeat patterns in the microlens and confocal aperture arrays that are scanned over a sample plane for each captured image, and controlling an emitted laser beam intensity to maintain constant integrated intensities in an image detector while the bidirectional scanning system changes direction. The invention may further include adding a second galvanometer mirror, such that a Gaussian intensity distribution of an emitted laser light is de-scanned at an image (and sample) plane, and/or destroying the coherency of an emitted laser light beam by inserting a small angle diffuser (for example, see EP 1510851), and/or flattening of a Gaussian intensity profile (for example, see JP 11095109) of an emitted laser light beam.

The present invention even further provides a method of changing the degree of confocality in a laser confocal scanning microscope, comprising adding an array of smaller confocal apertures on a sliding plate adjacent and parallel to a confocal aperture array of the laser confocal scanning microscope and spaced from it by a small air gap.

### Brief description of the drawings

Figure 1 Schematic of a typical Nipkow spinning disc confocal system with complementary microlens disc according to the prior art.
Figure 2 Schematic of a 2-D array laser confocal scanning system according to the prior art.
Figure 3a Illustration showing how an imperfection in a single pattern scan creates a strong stripe artefact in an image.
Figure 3b Illustration showing how an imperfection in a single pattern of a multiple pattern scan creates a weaker stripe artefact in the image.
Figure 4 Illustration of a current 2-D array laser confocal scan showing dead time at the end of each scan where scanning is performed bidirectionally. The array size is enlarged for clarity.
Figure 5a Illustration of a modified 2-D array laser confocal scan showing elimination of dead time at the end of each scan where scanning is performed bi-directionally and also showing that the Gaussian illumination is also scanned over the field of view.
Figure 5b Illustration of a modified 2-D array laser confocal scan showing elimination of dead time at the end of each scan where scanning is performed bidirectionally, and also showing that the Gaussian illumination has been descanned with the addition of a second galvanometer mirror.
Figure 5c Simplified illustration of synchronisation between first and second galvanometer mirrors to achieve descan of the Gaussian illumination at the sample.
Figure 6 Illustration of intensity modulation applied to maintain constant captured image intensities with changing scan speed.
Figure 7 Illustration of extreme case of striping originating from Gaussian, distribution of illumination.
Figure 8 Illustration of the principle of selectable pinholes using a sliding plate. Only partial rows and columns of pinholes are shown for clarity. Full implementation requires that the pattern of apertures is replicated both horizontally and vertically within the fixed and sliding plates as often as required.

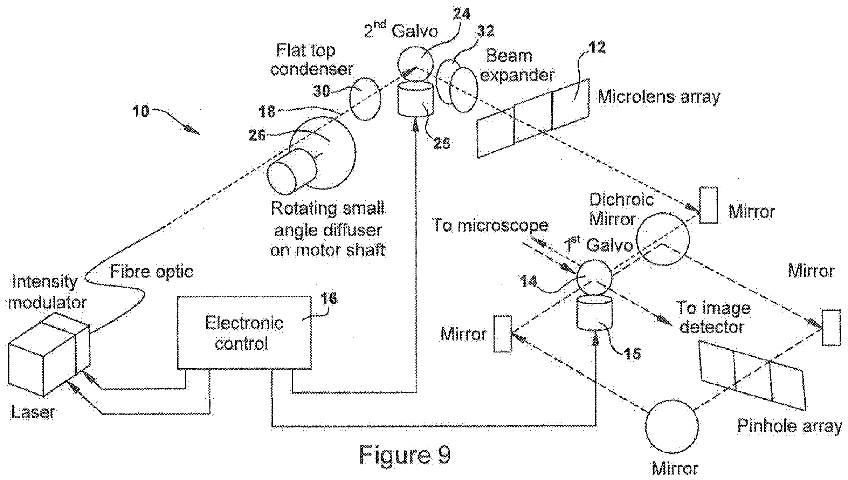

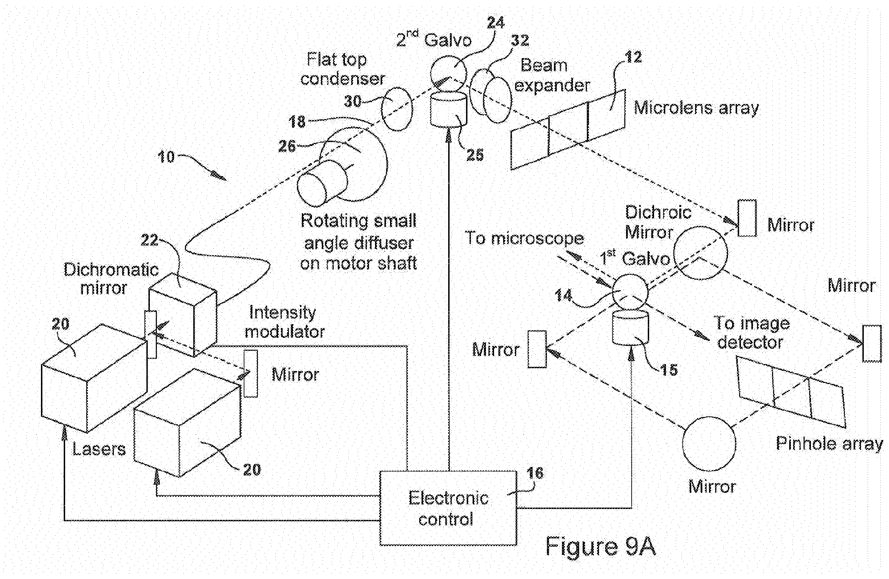

Figure 9 Overall schematic of 2D array scanning confocal module including the embodiments mentioned in the text.

### Description of preferred embodiments

Preferred embodiments of the present invention are now described by reference to the drawings.

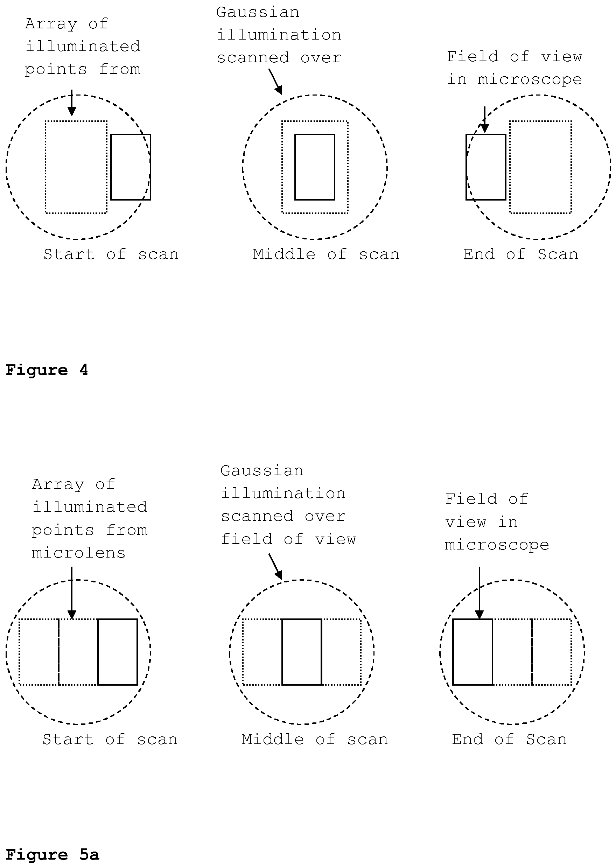

A first feature overcomes the lower throughput efficiency and reduces the random 'striping' due to imperfections in the microlens or aperture arrays of a 2-D array laser confocal scanner (10). This design requires additional scan patterns to be incorporated into a microlens array (12) and scanned by a galvanometer mirror (14) coupled to a motor (15) and a control (16). These additional repeat patterns along the axis of the scanning direction permit the scanning process to scan across the sample without the "dead" time inherent in the original design. The patterns are arranged such that the patterns at each end of the array are fully superimposed over the field of view when the galvanometer mirror changes its scan direction. Thus it becomes possible to continuously illuminate the sample during the scanning process, without "dead" time (compare Figure 4 and Figure 5a).

With continuous illumination of the field of view, the detected intensity during the slowing, stationary and accelerating stages of the change of scan direction will increase over the detected intensity during the steady speed portion of the scan due to the integrating nature of an image detector. This can be compensated by changing the illumination intensity of an input laser beam (18) from a laser (20). This may be achieved, for example, by using an Acousto Optical Modulator (AOM) (22), an Acousto Optical Tuneable Filter (AOTF), an adjustable micro mirror array, a neutral density filter wheel or similar equivalent acousto optical, optical, or opto-mechanical device. Taking for the purposes of illustration an AOTF, which is a device frequently included in a confocal illumination system since it permits the rapid selection of wavelengths from the input beam and deflects the selected wavelengths out of the zero order exit beam position (where they are directed into a beam dump to absorb the unwanted laser energy) to the first order beam position (where they are directed into the input of the confocal system). The AOTF also has the property of controlling the proportion of the selected wavelengths that appear in the zero and first order beams and is also able to do this at very rapid rates. The control signal waveform that drives the galvanometer mirror position is extracted and modified for use as a modulation control input signal for the wavelengths selected by the AOTF (Figure 6). Thus the system is able to maintain the integrated intensity of the illumination as the speed of the scan varies during the change of scan direction, thus eliminating any artefacts that would arise if such control was not implemented.

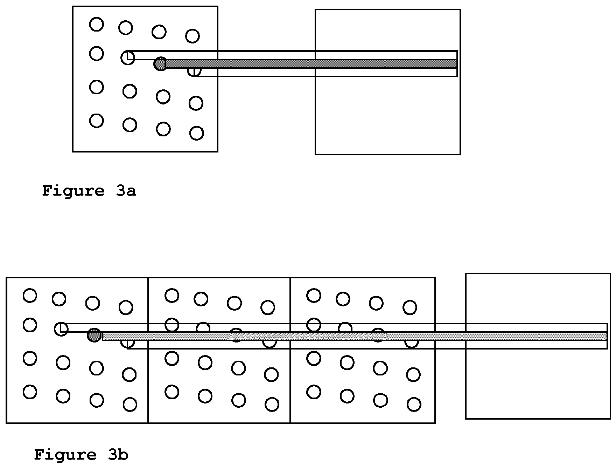

The result of combining these two techniques is an improvement of the throughput efficiency of the 2-D Array laser confocal scanner (10) and a reduction in the random 'striping' due to the presence of any imperfections that may appear in a single repeat pattern (Figures 3a and 3b). Careful initial design and selection of the manufacturing process make it unlikely that the same imperfection will appear in every repeat of the pattern, therefore the effect of a single imperfection is reduced by a factor of 1/n where n is the number of repeat patterns in the scan sweep. Since all repeat patterns scan over the sample plane for each image detected, image to image fluctuations are also eliminated.

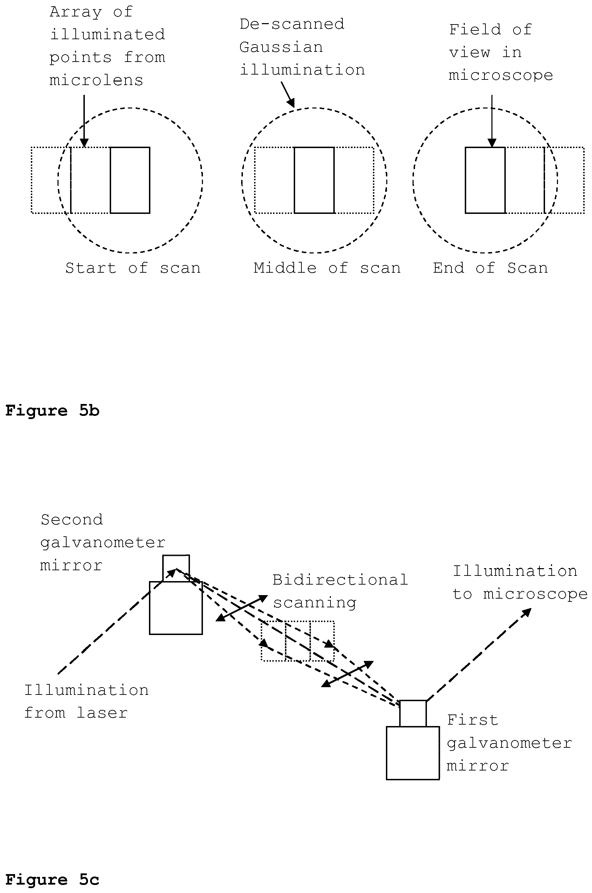

In accordance with a second feature, the coherency effects that give rise to a regular pattern of 'striping' in the detected images due to the scanning of the illumination source intensity distribution across the sample plane with the scanning of the microlens generated points across the image is eliminated. The introduction of a second galvanometer mirror (24) and drive motor (25) into the illumination path (Figure 5c), between the laser beam (18) and the input side of the microlens array (12), such that it is perfectly synchronised with the first galvanometer mirror (14) and that the rotation of the second galvanometer mirror is arranged to descan the illumination source, causing the illumination source to remain stationary at the scanned sample plane (Figure 5b) while the microlens generated spots continue to be scanned over the sample plane. This reduces the appearance of the pattern of 'striping' in the detected images.

A third disclosed feature for curing the coherency artefact is to reduce the degree of coherency in the input illumination beam by inserting a small angle diffuser (26) prior to the illumination reaching the microlens array (12). To ensure that the diffuser does not introduce additional patterns in the illumination of the microlens array, the diffuser can be in the form of a disc rotated by a motor such that any patterns formed by the diffuser are randomised over the image plane during the duration of the exposure time of the image detection device.

A fourth disclosed feature introduces beam shaping optics into the illumination beam prior to the microlens array to correct the Gaussian intensity distribution and make it more uniform which also results in a reduction of potential 'striping' in the image (Figure 7). Such correcting optics may take a variety of forms such as a flat top condenser (30); their only drawback is that they tend to be wavelength specific and therefore more useful in systems that operate at one wavelength or do not require rapid illumination wavelength switching.

A fifth disclosed feature changes the characteristics of a beam expander (32) upstream of the input side of the microlens array to trade reduced Gaussian shading for reduced intensity at the microlenses that also shows an improvement in the 'striping' in the image but at the expense of reduced captured image intensity. An appropriate balance between illumination throughput and Gaussian shading is necessary.

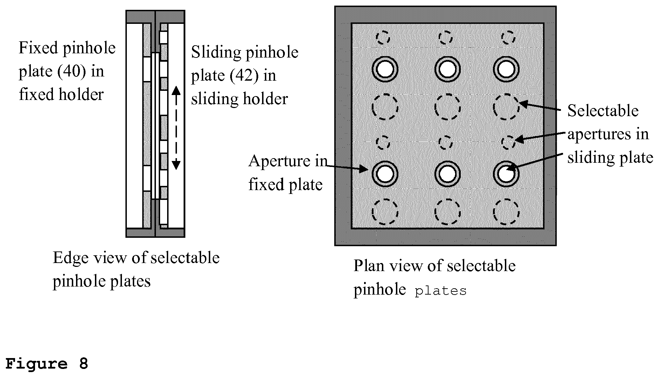

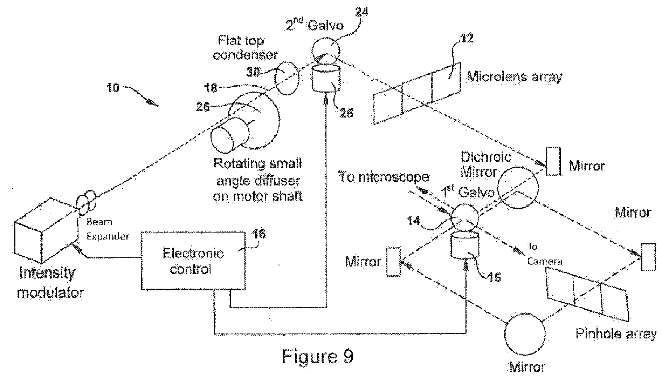

A sixth disclosed feature adapts the selectable size confocal aperture array to use air in place of oil (optical fluid) between the fixed (40) and moving plates (42), see Figure 8, and is designed to maintain a small constant separation between the plates. Sliding the moving plate along one axis permits a selected aperture from an array of different sized apertures to be aligned with the aperture in the fixed plate. The fixed and sliding aperture plates are mounted so as to be recessed below the surface of their respective plate carriers, thus the surfaces of the aperture plates are prevented from rubbing against each other, thus eliminating a potential cause of damage.

## Claims

1. A laser confocal scanning microscope comprising:
a laser light source (20) for emitting laser light (18) at one or more different wavelengths;
a laser beam expander (32) for expanding said emitted laser light into a larger diameter laser beam;
a first galvanometer mirror (14) for scanning and directing said laser beam through a microscope into a scanned sample plane, and for de-scanning a return light from the scanned sample plane,
an array of microlenses (12) positioned between said laser beam expander and said first galvanometer mirror,
an array of confocal apertures, or pinholes, which duplicates the pattern of said array of microlenses pre-aligned such that each confocal aperture of said array of confocal apertures coincides optically with a matching microlens in said array of microlenses;
a dichromatic mirror or a beam splitter, positioned between said first galvanometer mirror and said array of microlenses for separating said return light from said emitted laser light and directing said return light to said array of confocal apertures;
an image detector, wherein an arrangement of said array of confocal apertures and of said first galvanometer mirror is adapted such that light transmitted by said array of confocal apertures is directed to a rear face of said first galvanometer mirror, which is also a mirror, and as a result is scanned into said image detector to form an image of said sample plane;
an electronic control (16) for driving said first galvanometer mirror (14) via motor (15) to scan said laser beam emerging from said array of microlenses over said sample plane, to descan said returned light from said sample plane, and to rescan said light passing through said array of confocal apertures into said image detector;
and **characterized in that** a pattern of microlenses in said array of microlenses is arranged in a form of at least two sub-patterns of microlenses, constructed and orientated such that a single scan of said first galvanometer mirror causes each microlens of a single sub-pattern of said array of microlenses to trace a separate scan line across said sample plane, and in which each of the at least two sub-patterns of microlens and confocal aperture arrays are spatial duplicates, such that a single galvanometer sweep is adapted to scan the sample plane multiple times depending on a number of pattern duplications; and
**in that** a modulator (22) inserted into said laser beam is adapted to modulate the intensity of said laser beam such that the laser beam is blanked during a change of direction of said first galvanometer scan, thus permitting said first galvonometer scan to change direction while a sub-pattern of said array of microlenses is superimposed on said sample plane, and an amplitude of the first galvanometer scan across said sample plane arranged such that an entire sample plane is scanned by a change from superimposition on said sample plane of a first sub-pattern to a second sub-pattern; and
**in that** a second galvanometer mirror (24) is positioned in the emitted laser beam upstream of said laser beam expander such that the second galvanometer mirror is arranged to scan said illuminating laser beam over said array of microlenses; and
**in that** said electronic control (16) driving said first galvanometer mirror also drives said second galvanometer mirror (24) such that the scans of said first and second galvanometer mirrors are synchronized causing the illumination from the laser light source to remain centred on that part of said array of microlenses that is currently being scanned into the sample plane and said first galvanometer mirror descans the illuminating laser beam causing it to remain stationary in the sample plane.

2. The laser confocal scanning microscope according to claim 1 wherein said array of confocal apertures is a fixed or adjustable array of confocal apertures.

3. The laser confocal scanning microscope according to claim 2 wherein said adjustable array of confocal apertures includes means to modify the confocality of the scanned image comprising an additional plate (42) containing multiple sets of arrays of apertures smaller than the apertures in said array of confocal apertures (40) and positioned immediately adjacent and parallel to the said array of confocal apertures;
said additional plate is separated by a small air gap; and
a control system that is adapted to slide said additional aperture plate to select any one of the sets of aperture arrays, thus controlling the degree of confocality and throughput of the microscope.

4. The laser confocal scanning microscope according to any of claims 1 to 3 wherein said intensity modulator (22) is an acousto optical modulator, AOM, an acousto optical tuneable filter, AOTF, an adjustable micro mirror array, a motorised neutral density disc, or a modulator for directly modulating the laser light source.

5. The laser confocal scanning microscope according to any of claims 1 to 4 wherein said driving means for the first galvanometer mirror and/or said intensity modulation means are an electronic control system comprising hard wired logic, a digital signal processor, a microprocessor, a computer or similar computational device.

6. The laser confocal scanning microscope according to any of claims 1 to 5 wherein said laser light source includes means to modify a coherency in the sample scanning beam comprising a small angle diffuser that is inserted into the laser beam in order to reduce coherency effects of the laser light at an output of said array of microlenses.

7. The laser confocal scanning microscope according to claim 6 wherein said small angle diffuser is rotatably mounted (26) such that it does not introduce stationary illumination shading patterns into the sample plane.

8. The laser confocal scanning microscope according to any of claims 1 to 7 wherein said laser light source includes means to modify the illumination intensity distribution over said sample comprising:
a beam shaping optic, such as for example a flat top optical condenser (30), that is inserted into the emitted laser light beam path, or
a Gaussian neutral density filter matching an intensity distribution of said laser beam that is inserted into the illuminating laser light path, or
a means for changing characteristics of said laser beam expander that is provided to increase the beam expansion in order to reduce a Gaussian intensity shading.

9. The laser confocal scanning microscope according to any of claims 1 to 8 wherein said laser light source includes a multi-line laser, a tuneable laser, and/or an array of lasers emitting at various wavelengths, arranged to provide collinear laser beams.

10. The laser confocal scanning microscope according to any of claims 1 to 9 wherein a laser light from said laser light source passes through free space to the confocal scanner beam path or is coupled by a rigid or flexible optical light guide .

11. The laser confocal scanning microscope according to claim 10 wherein the optical light guide is an optical fibre.

12. A method of improving light throughput in the operation of the laser confocal scanning microscope of claim 1, comprising:
providing the at least two sub-patterns in each of the microlens and the confocal aperture array;
illuminating said microlens array with the laser beam;
driving the first galvanometer mirror to direct the laser light emitted from the microlens array and bi-directionally scan said emitted laser light over the sample plane and descan the return light from the sample plane and direct said return light into the confocal aperture array;
modulating the illuminating laser beam intensity to blank the illumination intensities while the bidirectional scan changes direction with one of the at least two sub-patterns of microlenses superimposed over the sample plane; and
rotating the second galvanometer mirror driven in synchronism with the first galvanometer mirror such that the illuminating laser beam remains centered on that part of the microlens array that is currently being scanned into the sample plane by the first galvanometer mirror.

## Patentansprüche

1. Konfokales Laser-Scanning-Mikroskop, Folgendes umfassend:
eine Laserlichtquelle (20) zum Emittieren von Laserlicht (18) mit einer oder mehreren Wellenlängen;
einen Laserstrahlausweiter (32) zum Ausweiten des emittierten Laserlichts zu einem Laserstrahl mit größerem Durchmesser;
einen ersten Galvanometerspiegel (14) zum Scannen und Lenken des Laserstrahls durch ein Mikroskop in eine gescannte Probenebene und zum Entscannen eines zurückkehrenden Lichts von der gescannten Probenebene,
eine Reihe von Mikrolinsen (12), die zwischen dem Laserstrahlausweiter und dem ersten Galvanometerspiegel positioniert ist,
eine Reihe von konfokalen Öffnungen oder Nadellöchern, die das Muster der Reihe von vorjustierten Mikrolinsen duplizieren, sodass jede konfokale Öffnung der Reihe konfokaler Öffnungen optisch mit einer passenden Mikrolinse in der Reihe von Mikrolinsen zusammenfällt;
einen dichromatischen Spiegel oder Strahlteiler, der zwischen dem ersten Galvanometerspiegel und der Reihe von Mikrolinsen positioniert ist, um das zurückkehrende Licht von dem emittierten Laserlicht zu trennen und das zurückkehrende Licht zu der Reihe konfokaler Öffnungen zu lenken;
einen Bilddetektor, wobei eine Anordnung der Reihe konfokaler Öffnungen und des ersten Galvanometerspiegels derart ausgelegt ist, dass von der Reihe konfokaler Öffnungen übertragenes Licht auf eine rückwärtige Fläche des ersten Galvanometerspiegels gelenkt wird, bei der es sich ebenfalls um einen Spiegel handelt, und infolgedessen in den Bilddetektor gescannt wird, um ein Bild der Probenebene zu bilden;
ein elektronisches Steuerelement (16) zum Antreiben des ersten Galvanometerspiegels (14) über einen Motor (15), um den Laserstrahl, der aus der Reihe von Mikrolinsen über der Probenebene auftaucht, zu scannen, das von der Probenebene zurückgekehrte Licht zu entscannen und das Licht erneut zu scannen, das durch die Reihe konfokaler Öffnungen in den Bilddetektor tritt;
und **dadurch gekennzeichnet, dass** ein Muster von Mikrolinsen in der Reihe von Mikrolinsen in Form von mindestens zwei Untermustern von Mikrolinsen angeordnet ist, die derart konstruiert und ausgerichtet sind, dass ein einziger Scan des ersten Galvanometerspiegels jede Mikrolinse eines einzelnen Untermusters der Reihe von Mikrolinsen dazu veranlasst, eine separate Scanlinie über die Probenebene zu ziehen, und wobei jedes der mindestens zwei Untermuster von Mikrolinsen und konfokalen Öffnungsreihen räumliche Duplikate sind, sodass ein einziges Galvanometerabtasten dazu ausgelegt ist, die Probenebene mehrere Male zu scannen, je nach einer Anzahl von Musterduplikationen; und
dadurch, dass ein Modulator (22), der in den Laserstrahl eingeführt wird, dazu ausgelegt ist, die Intensität des Laserstrahls derart zu modulieren, dass der Laserstahl während einer Richtungsänderung des ersten Galvanometerscans ausgeblendet wird, was es dem ersten Galvanometerspiegel ermöglicht, die Richtung zu ändern, während ein Untermuster der Reihe von Mikrolinsen über die Probenebene gelegt wird, und ein Umfang des ersten Galvanometerscans derart über die Probenebene hinweg angeordnet ist, dass eine gesamte Probenebene durch einen Wechsel von einer Überlagerung der Probenebene mit einem ersten Untermuster zu einem zweiten Untermuster gescannt wird; und
dadurch, dass ein zweiter Galvanometerspiegel (24) in dem emittierten Laserstrahl dem Laserstrahlausweiter vorgelagert positioniert ist, sodass der zweite Galvanometerspiegel dazu angeordnet ist, den beleuchtenden Laserstrahl über die Reihe von Mikrolinsen zu scannen; und
dadurch, dass das elektronische Steuerelement (16), das den ersten Galvanometerspiegel antreibt, auch den zweiten Galvanometerspiegel (24) antreibt, sodass die Scans des ersten und zweiten Galvanometerspiegels synchronisiert sind, was veranlasst, dass die Beleuchtung von der Laserlichtquelle auf dem Teil der Reihe von Mikrolinsen zentriert bleibt, der derzeit in die Probenebene gescannt wird, und der erste Galvanometerspiegel entscannt den beleuchtenden Laserstrahl, indem er ihn dazu veranlasst, in der Probenebene stationär zu bleiben.

2. Konfokales Laser-Scanning-Mikroskop nach Anspruch 1, wobei die Reihe konfokaler Öffnungen eine feststehende oder einstellbare Reihe konfokaler Öffnungen ist.

3. Konfokales Laser-Scanning-Mikroskop nach Anspruch 2, wobei die einstellbare Reihe konfokaler Öffnungen Mittel zum Modifizieren der Konfokalität des gescannten Bilds beinhaltet, umfassend eine zusätzliche Platte (42), die mehrere Sets von Reihen von Öffnungen enthält, die kleiner als die Öffnungen in der Reihe konfokaler Öffnungen (40) sind und direkt neben und parallel zu der Reihe konfokaler Öffnungen positioniert sind; die zusätzliche Platte durch einen kleinen Luftspalt getrennt ist; und
ein Steuersystem, das dazu ausgelegt ist, die zusätzliche Lochplatte zu verschieben, um ein beliebiges der Sets von Öffnungsreihen auszuwählen, wodurch es den Grad an Konfokalität und Durchsatz des Mikroskops steuert.

4. Konfokales Laser-Scanning-Mikroskop nach einem der Ansprüche 1 bis 3, wobei der Intensitätsmodulator (22) ein akustisch-optischer Modulator (AOM), ein akustisch-optischer stimmbarer Filter, AOTF, eine einstellbare Mikrospiegelreihe, eine motorisierte neutrale Platte mit hoher Dichte oder ein Modulator zum direkten Modulieren der Laserlichtquelle ist.

5. Konfokales Laser-Scanning-Mikroskop nach einem der Ansprüche 1 bis 4, wobei die Antriebsmittel für den ersten Galvanometerspiegel und/oder die Intensitätsmodulationsmittel ein elektronisches Steuersystem sind, das Festverdrahtungslogik, einen digitalen Signalprozessor, einen Mikroprozessor, einen Computer oder eine ähnliche Rechenvorrichtung umfasst.

6. Konfokales Laser-Scanning-Mikroskop nach einem der Ansprüche 1 bis 5, wobei die Laserlichtquelle Mittel zum Modifizieren einer Kohärenz in dem Probescanstrahl beinhaltet, umfassend einen Kleinwinkeldiffusor, der in den Laserstrahl eingeführt wird, um Kohärenzwirkungen des Laserlichts bei einer Ausgabe der Reihe von Mikrolinsen zu reduzieren.

7. Konfokales Laser-Scanning-Mikroskop nach Anspruch 6, wobei der Kleinwinkeldiffusor drehbar montiert (26) ist, sodass er keine stationären Beleuchtungsschattierungsmuster in die Probenebene einführt.

8. Konfokales Laser-Scanning-Mikroskop nach einem der Ansprüche 1 bis 7, wobei die Laserlichtquelle Mittel beinhaltet, um die Beleuchtungsintensitätsverteilung über die Probe zu modifizieren, Folgendes umfassend:
eine strahlformende Optik, wie etwa einen optischen Flachkopfkondensor (30), der in den emittierten Laserlichtstrahlpfad eingeführt wird, oder
einen Gaußschen Neutralfilter, der eine Intensitätsverteilung des Laserstrahls, der in den beleuchtenden Laserlichtpfad eingeführt wird, abgleicht, oder
Mittel zum Ändern von Charakteristiken des Laserstrahlausweiters, der bereitgestellt wird, um die Strahlausweitung zu erhöhen, um eine Gaußsche Intensitätsschattierung zu reduzieren.

9. Konfokales Laser-Scanning-Mikroskop nach einem der Ansprüche 1 bis 8, wobei die Laserlichtquelle einen Multi-Line-Laser, einen abstimmbaren Laser und/oder eine Reihe von Lasern beinhaltet, die mit verschiedenen Wellenlängen emittieren, dazu angeordnet, kollineare Laserstrahlen bereitzustellen.

10. Konfokales Laser-Scanning-Mikroskop nach einem der Ansprüche 1 bis 9, wobei ein Laserlicht von der Laserlichtquelle durch freien Raum zum konfokalen Scannerstrahlpfad tritt oder durch einen starren oder flexiblen optischen Lichtleiter gekoppelt ist.

11. Konfokales Laser-Scanning-Mikroskop nach Anspruch 10, wobei der optische Lichtleiter eine Lichtleitfaser ist.

12. Verfahren zum Verbessern des Lichtdurchsatzes bei Betrieb des konfokalen Laser-Scanning-Mikroskops nach Anspruch 1, Folgendes umfassend:
Bereitstellen von mindestens zwei Untermustern in jeder von der Mikrolinsen- und konfokalen Öffnungsreihe;
Beleuchten der Mikrolinsenreihe mit dem Laserstrahl;
Antreiben des ersten Galvanometerspiegels, um das von der Mikrolinse emittierte Licht zu lenken und das emittierte Lasterlicht bidirektional über die Probenebene zu scannen und das zurückkehrende Licht von der Probenebene zu entscannen und das zurückkehrende Licht von der Probenebene in die konfokale Öffnungsreihe zu lenken;
Modulieren der beleuchtenden Laserstrahlintensität, um die Beleuchtungsintensitäten auszublenden, während der bidirektionale Scan die Richtung ändert, wobei eines der mindestens zwei Untermuster von Mikrolinsen über die Probenebene gelegt ist; und
Drehen des zweiten Galvanometerspiegels, der synchron mit dem ersten Galvanometerspiegel angetrieben wird, sodass der beleuchtende Laserstrahl auf dem Teil der Mikrolinsenreihe zentriert bleibt, der derzeit von dem ersten Galvanometerspiegel in die Probenebene gescannt wird.

## Revendications

1. Microscope confocal à balayage laser comprenant :
une source de lumière laser (20) pour émettre une lumière laser (18) à une ou plusieurs longueurs d'onde différentes ;
un agrandisseur de faisceau laser (32) pour agrandir ledit faisceau laser émis en un faisceau laser de plus grand diamètre ;
un premier miroir galvanométrique (14) pour balayer et diriger ledit faisceau laser à travers un microscope dans un plan d'échantillon balayé, et pour dé-balayer une lumière renvoyée à partir de plan d'échantillon balayé,
un réseau de microlentilles (12) positionné entre ledit agrandisseur de faisceau laser et ledit premier miroir galvanométrique,
un réseau d'ouvertures confocales, ou de trous d'épingle, qui duplique le motif dudit réseau de microlentilles pré-aligné de telle sorte que chaque ouverture confocale dudit réseau d'ouvertures confocales coïncide optiquement avec une microlentille correspondante dans ledit réseau de microlentilles ;
un miroir dichromatique ou un séparateur de faisceau, positionné entre ledit premier miroir galvanométrique et ledit réseau de microlentilles pour séparer ladite lumière renvoyée de ladite lumière laser émise et diriger la lumière renvoyée vers ledit réseau d'ouvertures confocales ;
un détecteur d'image, dans lequel un agencement dudit réseau d'ouvertures confocales et dudit premier miroir galvanométrique est adapté pour qu'une lumière transmise par ledit réseau d'ouvertures confocales soit dirigée vers une face arrière dudit premier miroir galvanométrique, qui est également un miroir, et soit ainsi numérisée dans ledit détecteur d'image pour former une image dudit plan d'échantillon ;
une commande électronique (16) pour entraîner ledit premier miroir galvanométrique (14) via un moteur (15) pour balayer ledit faisceau laser émergeant dudit réseau de microlentilles sur ledit plan d'échantillon, pour dé-balayer ladite lumière renvoyée à partir dudit plan d'échantillon, et pour balayer à nouveau ladite lumière passant à travers ledit réseau d'ouvertures confocales dans ledit détecteur d'image ;
et **caractérisé en ce qu'**un motif de microlentilles dans ledit réseau de microlentilles est agencé sous la forme d'au moins deux sous-motifs de microlentilles, construits et orientés de manière à ce qu'un unique balayage dudit premier miroir galvanométrique amène chaque microlentille d'un unique sous-motif dudit réseau de microlentilles à tracer une ligne de balayage séparée dans ledit plan d'échantillon), et dans lequel chacun des au moins deux sous-motifs de microlentilles et des réseaux d'ouvertures confocales sont des copies spatiales, de sorte qu'un unique balayage de galvanomètre est adapté pour balayer le plan d'échantillon plusieurs fois en fonction d'un certain nombre de copies de motif ; et
**en ce qu'**un modulateur (22) inséré dans ledit faisceau laser est adapté pour moduler l'intensité dudit faisceau laser de façon que le faisceau laser soit masqué lors d'un changement de direction dudit premier balayage de galvanomètre, pour ainsi permettre audit premier balayage de galvanomètre de changer de direction tandis qu'un sous-motif dudit réseau de microlentilles est superposé sur ledit plan d'échantillon, et une amplitude du premier balayage de galvanomètre sur ledit plan d'échantillon étant agencée de façon qu'un plan entier d'échantillon soit balayé par un changement de superposition sur ledit plan d'échantillon d'un premier sous-motif à un second sous-motif ;
et
**en ce qu'**un second miroir galvanométrique (24) est positionné dans le faisceau laser émis en amont dudit agrandisseur de faisceau laser de façon que le second miroir galvanomètre soit agencé pour balayer ledit faisceau laser d'éclairage sur ledit réseau de microlentilles et
**en ce que** ladite commande électronique (16) entraînant ledit premier miroir galvanométrique entraîne également ledit second miroir galvanométrique (24) de façon que les balayages desdits premier et second miroirs galvanométriques soient synchronisés pour amener l'éclairage provenant de la source de lumière laser à rester centré sur la partie dudit réseau de microlentilles qui est actuellement balayée dans le plan d'échantillon et ledit premier miroir galvanométrique dé-balaye le faisceau laser d'éclairage pour l'amener à rester stationnaire dans le plan d'échantillon.

2. Microscope confocal à balayage laser selon la revendication 1 dans lequel ledit réseau d'ouvertures confocales est un réseau fixe ou ajustable d'ouvertures confocales.

3. Microscope confocal à balayage laser selon la revendication 2 dans lequel ledit réseau ajustable d'ouvertures confocales inclut un moyen pour modifier la confocalité de l'image balayée comprenant une plaque supplémentaire (42) contenant de multiples ensembles de réseaux d'ouvertures plus petites que les ouvertures dans ledit réseau d'ouvertures confocales (40) et positionnée immédiatement adjacente et parallèle audit réseau d'ouvertures confocales ;
ladite plaque supplémentaire est séparée par un petit intervalle d'air ; et
un système de commande qui est adapté pour faire coulisser ladite plaque d'ouvertures supplémentaire pour sélectionner l'un quelconque des ensembles de réseaux d'ouvertures, pour ainsi contrôler le degré de confocalité et la capacité du microscope.

4. Microscope confocal à balayage laser selon l'une quelconque des revendications 1 à 3 dans lequel ledit modulateur d'intensité (22) est un modulateur acousto-optique (AOM), un filtre accordable acousto-optique (AOTF), un réseau de micro-miroirs ajustables, un disque de densité neutre motorisé, ou un modulateur pour moduler directement la source de faisceau laser.

5. Microscope confocal à balayage laser selon l'une quelconque des revendications 1 à 4 dans lequel ledit moyen d'entraînement pour le premier miroir galvanométrique et/ou ledit moyen de modulation d'intensité est un système de commande électronique comprenant une logique câblée, un processeur de signal numérique, un microprocesseur, un ordinateur ou un dispositif de calcul similaire.

6. Microscope confocal à balayage laser selon l'une quelconque des revendications 1 à 5 dans lequel ladite source de lumière laser inclut un moyen pour modifier une cohérence dans le faisceau de balayage d'échantillon comprenant un diffuseur à petit angle qui est inséré dans le faisceau laser afin de réduire les effets de cohérence de la lumière laser à la sortie dudit réseau de microlentilles.

7. Microscope confocal à balayage laser selon la revendication 6 dans lequel ledit diffuseur à petit angle est monté rotatif (26) de manière à ne pas introduire de motifs d'ombrage d'éclairage stationnaires dans le plan d'échantillon.

8. Microscope confocal à balayage laser selon l'une quelconque des revendications 1 à 7 dans lequel ladite source de lumière laser inclut un moyen pour modifier la distribution d'intensité d'éclairage sur ledit échantillon comprenant :
une optique de mise en forme de faisceau, telle que par exemple un condenseur optique à sommet plat (30), qui est inséré dans le trajet de faisceau de lumière laser émise, ou
un filtre gaussien de densité neutre correspondant à une distribution d'intensité dudit faisceau laser qui est inséré dans le trajet de lumière laser d'éclairage, ou
un moyen pour changer les caractéristiques dudit agrandisseur de faisceau laser qui est fourni pour augmenter l'agrandissement du faisceau afin de réduire l'ombrage d'intensité gaussienne.

9. Microscope confocal à balayage laser selon l'une quelconque des revendications 1 à 8 dans lequel ladite source de lumière laser inclut un laser multiligne, un laser accordable, et/ou un réseau de lasers émettant à différentes longueurs d'onde, agencé pour fournir des faisceaux laser colinéaires.

10. Microscope confocal à balayage laser selon l'une quelconque des revendications 1 à 9 dans lequel une lumière laser provenant de ladite source de lumière laser passe à travers un espace libre vers le trajet de faisceau de balayage confocal ou est couplée par un guide de lumière optique rigide ou flexible.

11. Microscope confocal à balayage laser selon la revendication 10, dans lequel le guide de lumière optique est une fibre optique.

12. Procédé d'amélioration du débit de lumière dans le fonctionnement du microscope confocal à balayage laser selon la revendication 1, comprenant :
la fourniture des au moins deux sous-motifs dans chacun des microlentilles et du réseau d'ouvertures confocales ;
l'éclairage dudit réseau de microlentilles avec le faisceau laser ;
l'entraînement du premier miroir galvanométrique pour diriger la lumière laser émise par le réseau de microlentilles et balayer de manière bidirectionnelle ladite lumière laser émise sur le plan d'échantillon et dé-balayer la lumière renvoyée à partir du plan d'échantillon et diriger ladite lumière renvoyée dans le réseau d'ouvertures confocales ;
la modulation de l'intensité du faisceau laser d'éclairage pour masquer les intensités d'éclairage tandis que le balayage bidirectionnel change de direction avec l'un des au moins deux sous-motifs de microlentilles superposé sur le plan d'échantillon ; et
la rotation du second miroir galvanométrique entraîné de manière synchrone avec le premier miroir galvanométrique de façon que le faisceau laser d'éclairage reste centré sur la partie du réseau de microlentilles qui est actuellement balayée dans le plan d'échantillon par le premier miroir galvanométrique.
